# EUROPEAN PATENT SPECIFICATION

(11) **EP 2 294 399 B1**
(45) Date of publication and mention of the grant of the patent: **21.08.2019**
(21) Application number: 09769673.6
(22) Date of filing: 29.06.2009
(51) Int. Cl.: G01N 29/14, G01N 27/83, G01N 27/90, G01B 21/14, G01B 7/34

(54) **INTEGRATED MULTI-SENSOR NON-DESTRUCTIVE TESTING**
INTEGRIERTER MULTISENSOR FÜR NICHTDESTRUKTIVE TESTVERFAHREN
CONTRÔLE NON DESTRUCTIF INTÉGRÉ MULTI-CAPTEURS

(30) Priority: 27.06.2008 US 76341
(43) Date of publication of application: 16.03.2011
(73) Proprietor: PII (Canada) Limited, Markham, Ontario L3R 8T9 (CA)
(72) Inventor: SUTHERLAND, Jeffrey, Earle, Bolton, Ontario L7E 5W4 (CA)
(74) Representative: Illingworth-Law, William Illingworth
(86) International application number: PCT/IB2009/006499
(87) International publication number: WO 2009/156862

(56) References cited:
- EP-A1- 0 717 842
- EP-A2- 0 230 639
- EP-A2- 0 254 144
- WO-A1-96/01424
- CA-A1- 2 633 271
- GB-A- 2 415 761
- US-A- 5 689 070
- US-A- 5 808 202
- US-A- 5 907 100
- US-A1- 2007 151 344
- US-B2- 6 404 189
- NIESE ET AL: "Wall thickness measurement sensor for pipeline inspection using EMAT technology in combination with pulsed eddy current and magnetic flux leakage", 9TH EUROPEAN CONFERENCE ON NDT : ECNDT BERLIN 2006 ; SEPTEMBER 25 - 29, 2006,, [Online] 1 January 2006 (2006-01-01), pages 1-10, XP009152054, Retrieved from the Internet: URL:http://www.ndt.net/article/ecndt2006/d oc/Tu.3.1.5.pdf>

## Description

### TECHNICAL FIELD

The present invention relates to non-destructive testing and, more particularly, to methods of acquiring and processing data from a plurality of different sensor types for non-destructive testing of metallic structures, to an integrated multi-sensor device for non-destructive testing of metallic structures, to methods of acquiring and processing data from at least one such integrated sensor device, and to non-destructive testing of pipelines, including the use of intelligent pigs to diagnose defects in the walls of oil and gas pipelines.

### BACKGROUND

NIESE ET AL: "Wall thickness measurement sensor for pipeline inspection using EMAT technology in combination with pulsed eddy current and magnetic flux leakage", 9th European Conference on NDT: ECNDT Berlin 2006; September 25-29 2006 discloses an electromagnetic acoustic transducer (EMAT) for excitation and detection of linear polarized shear waves at normal incidence.

Intelligent in-line inspection (ILI) tools, also referred to as intelligent pigs, are commonly used for assessing the integrity of pipelines by detecting defects using non-destructive testing (NDT) techniques. Such defects include, for example, corrosion, metal loss, cracking (including stress corrosion cracking (SCC)), and other mechanical damage. NDT techniques that have been employed in various intelligent pigs tools include magnetic flux leakage (MFL), eddy current (EC), and electromagnetic acoustic transducers (EMAT) measurements. Some ILI tools have implemented two or more of these NDT techniques together to better discriminate defect characteristics (e.g., using EC together with MFL to discern whether metal loss is on the inside diameter (ID) or outside diameter (OD) of the pipeline wall, sometimes referred to as ID/OD discrimination) and/or to more accurately discriminate defects impacting pipeline integrity (e.g., longitudinally oriented cracks) from non-injurious features (e.g., insignificant defects or flaws that generally do not signify, or develop into, integrity impacting defects).

There remains, however, a further need for improved ILI tools and NDT transducers and processing techniques and, particularly, for improved integration of NDT techniques to provide for improved detection of defects, such as improvements in sensitivity, feature discrimination (e.g., discriminating between significant and insignificant defects, or between corrosion and pitting or metal loss, etc.), physical characterization (e.g., shape, size, metal loss vs. corrosion, etc.), accuracy (e.g., reduced error margins), and/or improved confidence in the accuracy of the feature discrimination or characterization (e.g., improved reliability).

### SUMMARY

The present invention is defined in the accompanying claims.

Various embodiments of the present invention relate to methods and apparatus for integrating NDT techniques. Some embodiments of the present invention relate to an integrated multi-sensor device for non-destructive testing of metallic structures and to methods of acquiring and processing data from at least one such integrated sensor device. Furthermore, some embodiments of the present invention relate to methods of using an integrated multi-sensor device to provide for improved discrimination of known inspectable features or characteristics of a metallic structure, and also to provide for measuring or characterizing non-conventional features or characteristics of a metallic structure.

In accordance with some embodiments, a multi-sensor assembly operable in characterizing a metallic structure comprises: (1) a housing comprising (i) at least one electrically conductive coil configured for operation as at least one electromagnetic acoustic transducer (EMAT) sensor and at least one eddy current (EC) sensor and (ii) at least one magnetic flux leakage (MFL) sensor, wherein the at least one electrically conductive coil and the at least one MFL sensor are configured in the housing such that when the housing is disposed adjacent to or in contact with the metallic structure, the at least one coil and the MFL sensor are operable to acquire EMAT, EC, and MFL signals from a localized region of the metallic structure corresponding to the portion of the housing disposed adjacent to or in contact with the metallic structure; and (2) at least one deflection sensor configured to generate a signal representative of the spatial position of the housing. The at least one electrically conductive coil may comprise a common coil that is operable as both at least one EMAT sensor and at least one EC sensor and/or may comprise separate coils for implementing at least one EMAT sensor and at least one EC sensor.

In various embodiments, the signal representative of the spatial position of the housing is capable of being used to correct or compensate at least one of (i) at least one of the acquired EMAT, EC, and MFL signals, and (ii) at least one of the spatial positions associated with at least one of the acquired EMAT, EC, and MFL signals.

In accordance with some embodiments, an in-line inspection instrument for insertion into a pipeline (e.g., an intelligent pig) may be implemented by arranging a plurality of such multi-sensor assemblies in a circumferentially spaced configuration and oriented such that each multi-sensor assembly is operable to acquire signals from a respective circumferential portion of the wall of a pipeline into which the pig is inserted. In such implementations, the respective signals representative of the spatial position of the housings of different ones of the multi-sensor assemblies are capable of being processed to provide a measurement of the inner diameter of said pipeline.

Various embodiments of the present invention provide a method for characterizing a metallic structure, the method comprising: acquiring, for each of a plurality of localized regions of the metallic structure, an electromagnetic acoustic transducer (EMAT) signal, an eddy current (EC) signal, a magnetic flux leakage (MFL) signal, and a deflection signal representing the spatial movement of a member in response to the topography of a surface of the metallic structure as the member moves in a direction parallel the surface; and processing the acquired signals to characterize each of one or more features of the metallic structure based on at least two of the EMAT, EC, MFL, and deflection signals acquired from a common localized region in which at least a portion of the feature is located. In some embodiments, the EMAT, EC, MFL, and deflection signals are acquired for each localized region from sensors that are integrated as a multi sensor assembly having a head portion such that the sensors generate the EMAT, EC, MFL, and deflection signals for each given localized region when the head portion is disposed adjacent to or in contact with the given localized region.

The processing may comprise performing a correlation based on at least two of the acquired signals; for example, the correlation may be performed based on the acquired deflection signals and the acquired MFL signals over contiguous localized regions in which the signals are acquired. Additionally, the processing may comprise determining a characteristic of a given feature according to processing a first one of said acquired signals, and correcting the determined characteristic of the given feature based on a second one of said acquired signals. As another example, the processing may comprise at least one of (i) correcting spatial coordinates associated with at least one of the acquired EMAT, EC, and MFL signals based on the acquired deflection signal, and (ii) correcting the magnitude of at least one of the acquired EMAT, EC, and MFL signals based on the acquired deflection signal. The processing may also be performed according to a point-by-point comparison of at least one of (i) at least two different types of the acquired signals, and (ii) characteristics determined from at least two different types of the acquired signals.

Additionally, some embodiments of the present invention relate to an Electromagnetic Acoustic Transducer (EMAT) array and associated methods for inspecting a metallic structure by using an element of the EMAT array to induce an acoustic excitation in the metallic structure, and detecting reflections of the acoustic excitation from boundaries of the metallic structure using one or more neighboring or adjacent elements of the EMAT array, thus providing for inspecting regions of the metallic structure that are located between EMAT array elements. Although such an EMAT array and associated methods may be implemented using an array of multi-sensor devices that each comprises one or more EMAT sensors in addition to one or more other transducers (e.g., MFL and/or EC and/or caliper), alternative implementations may employ only EMAT sensors.

Some embodiments of the present invention described hereinabove and hereinbelow may be used for inline inspection of metallic pipelines, with the integrated sensor devices and/or EMAT arrays being implemented as part of an inline pipeline inspection tool, commonly known as a "pig."

Further, some embodiments of the present invention relate to a provider or supplier of an inline inspection tool (e.g., a pig) that includes such multi-sensor devices selectively enabling one or more of the sensors and/or one or more data acquisition sequences associated with one or more of the sensors, with such selective enablement capable of being implemented according to alterable information stored in the inline inspection tool and/or multi-sensor devices therein, such as the software or firmware that is operable in controlling the multi-sensor devices and/or a key (e.g., cryptographic) that indicates which sensors and/or acquisition sequences are enabled for use. Such selective enablement and altering may be performed remotely via a communication network (e.g., a private or public network, such as the Internet), allowing for a customer or subscriber to alter (upgrade or downgrade) the functionality of their inline inspection tool in a convenient manner (e.g., on an as-needed or on-demand basis). The downloaded information (e.g., key or software/firmware) may be stored in one or more storage media used by the controller of the multi-sensor devices of the inline inspection tool either in an online manner (e.g., directly upon downloading) or in an offline manner (e.g., after initially downloading the information to a storage medium separate from the one or more storage media used by the controller of the multi-sensor). Alternatively or additionally, information for altering the features of the multi-sensor devices in the inline inspection tool may be provided by means other than a remote network connection, such as by a CDROM delivery to the customer or subscriber by conventional mail, or by way of in-person on-site servicing by the provider or supplier (or other service provider). Features may be enabled for a limited number of uses and/or a limited time period. The price (e.g., one-time price, a subscription fee, etc.) paid by a customer or subscriber may be based, in any of a variety of ways, on the features that are selectively enabled. For example, pricing may be on a per feature (e.g., data acquisition sequences and/or sensors) basis, or on a group-of-features basis, and may alternatively or additionally be associated, on an individual or group-of-features basis, with number of uses and/or a time period.

It will be appreciated by those skilled in the art that the foregoing brief description and the following detailed description are exemplary and explanatory of this invention, but are not intended to be restrictive thereof or limiting of the advantages which can be achieved by this invention. Additionally, it is understood that the foregoing summary of the invention is representative of some embodiments of the invention, and is neither representative nor inclusive of all subject matter and embodiments within the scope of the present invention. Thus, the accompanying drawings, referred to herein and constituting a part hereof, illustrate embodiments of this invention, and, together with the detailed description, serve to explain principles of this invention.

### BRIEF DESCRIPTION OF THE DRAWINGS

Aspects, features, and advantages of embodiments of the invention, both as to structure and operation, will be understood and will become more readily apparent when the invention is considered in the light of the following description made in conjunction with the accompanying drawings, in which like reference numerals designate the same or similar parts throughout the various figures, and wherein:
**FIG. 1A** depicts a side view of an illustrative pipeline inline inspection tool or pig that may be implemented in accordance with some embodiments of the present invention;
**FIG. 1B** depicts a magnified view of a portion of the illustrative pipeline inline inspection tool or pig depicted in **FIG. 1A** according to some embodiments of the present invention;
**FIG. 2A** schematically depicts a pipeline portion that may be inspected by an inline inspection tool according to some embodiments of the present invention;
**FIG. 2B** depicts an expanded view of one of the straight segment portions of the pipeline portion depicted in **FIG. 2A**;
**FIG. 2C** shows an expanded view of a section of the straight segment portion depicted in **FIG. 2B**;
**FIG. 3** schematically depicts the section shown in **FIG. 2C** in more detail along with three integrated multi-sensor devices of a pig moving along the axial direction to acquire signals from the section, in accordance with some embodiments of the present invention;
**FIG. 4** schematically depicts an integrated multi-sensor device according to some embodiments of the present invention;
**FIG. 5** is an illustrative block diagram of a multi-sensor device in accordance with some embodiments of the present invention;
**FIG. 6** is an operational flow diagram illustrating various methods for processing signals acquired from a multi-sensor device, in accordance with some embodiments of the present invention;
**FIG. 7** depicts another method for acquiring and processing signals from a multi-sensor device, in accordance with some embodiments of the present invention;
**FIG. 8** shows a representation of MFL and caliper sensor signals juxtaposed after each acquired sensor signal has been mapped onto a three-dimensional grid representative of the inner pipeline wall, in accordance with processing the MFL and caliper sensor signals according to some embodiments of the present invention;
**FIG. 9** schematically depicts an illustrative pipeline cross-section in the region of a dent, with one of the multi-sensor devices shown at each of four locations as it traverses the pipe and acquires samples at the illustrated representative sampling rate, in accordance with some embodiments of the present invention; and
**FIG. 10** schematically depicts a partial cross-sectional view of a pipeline and an array of EMAT sensors operated to acquire signals therefrom, in accordance with some embodiments of the present invention.

### DESCRIPTION OF EMBODIMENTS OF THE INVENTION

While the ensuing illustrative embodiments of the present invention are presented in the context of pipeline inspection and, more particularly, to *in situ* non-destructive testing of pipelines by using a pig, those skilled in the art will understand that the present invention is limited neither to sensors for use in a pig nor to pipeline inspection, and that some embodiments of the present invention may be applied to any of many other applications involving non-destructive testing of metallic structures.

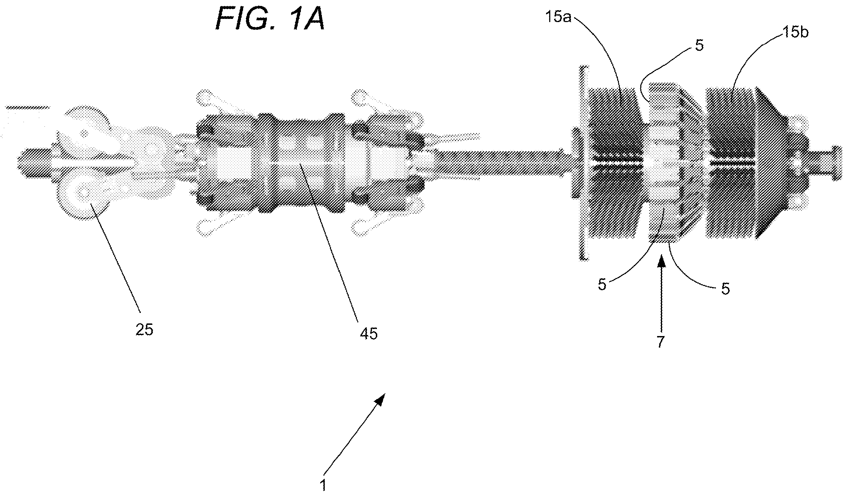

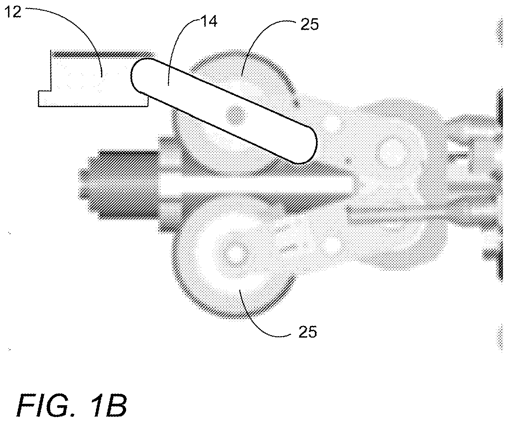

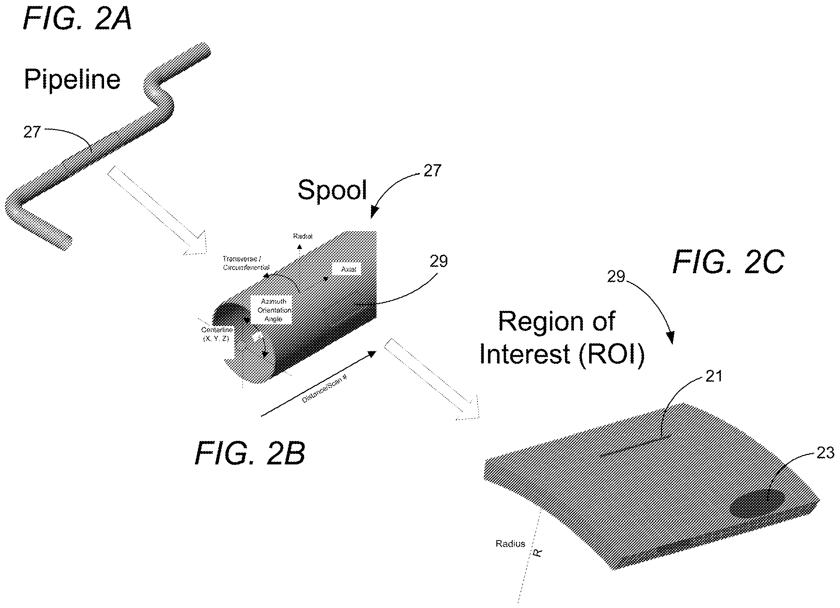

**Figure 1A** depicts a side view of an illustrative pipeline inline inspection tool or pig 1 that may be implemented in accordance with some embodiments of the present invention. Pig 1 includes a plurality of a multi-sensor devices **5** arranged in a circular/ring 7 configuration, magnetizing brushes **15a** and **15b** respectively coupled to opposite poles of a magnet (not shown), odometer wheels **25**, and an instrumentation vehicle **45.** A magnified view of the rearward portion of the inline inspection tool of **FIG. 1A** is depicted in **FIG. 1B**, showing in more detail a rearward sensor that comprises a sensor head **12** attached to an armature **14** (which is rotatably attached coaxially with an odometer wheel **25**) and that comprises one or more sensors (e.g., caliper, EMAT, EC, etc.) as will be understood by those skilled in the art in view of the herein disclosure. As is well known, to inspect a pipeline, pig **1** is inserted into the pipeline, such as the one shown in **Figure 2**, and as pig 1 is propelled through the pipeline, it acquires signals from the pipeline wall. For ease of reference and clarity of exposition, the ensuing embodiments are described with reference to generally cylindrical coordinates corresponding to the generally cylindrical shape of a pipeline in which the pig is disposed for inline inspection thereof.

More specifically, **Figure 2A** schematically depicts a pipeline portion comprising several straight segments separated by several bends, **Figure 2B** depicts an expanded view of one of the straight segment portions 27 (e.g., a spool), and **Figure 2C** shows an expanded view of a section 29 thereof (i.e., Region of Interest (ROI)). Coordinates are schematically depicted with respect to the spool, with the z-axis being oriented along the axial direction corresponding to the scan direction, the radial direction being oriented normal to the z-axis, and the azimuthal angle corresponding to the angular rotation about the z-axis, with the azimuthal (or circumferential) direction being oriented in a direction mutually perpendicular to the radial and axial directions. As schematically depicted in **Figure 2C**, by way of example, the ROI includes a narrow, elongated axial feature ("feature" also referred to herein as an attribute or characteristic) 21 and a circumferentially and axially extending feature 23. Such features (or attributes or characteristics) may represent one or more of at least the following: topological/topographical/geometric variations (e.g., dents, scratches, peeling, wall thickness, etc.), material property (e.g., compositional) variations (e.g., surface and/or bulk property variations, such as due to corrosion or to differences between bulk material and surface coating material, etc.), and mechanical property (e.g., stress/strain) variations.

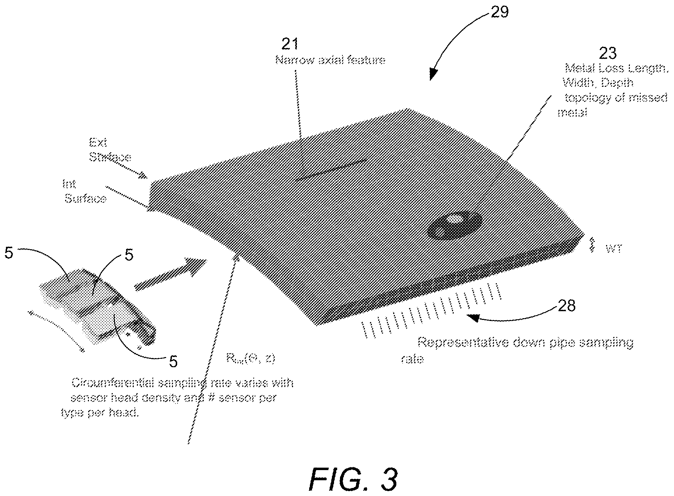

**Figure 3** schematically depicts feature 23 in more detail, illustrating that feature 23 may comprise contiguous regions having distinguishable characteristics, such as distinguishable topographical/topological/dimensional features (e.g., due to metal loss) and/or distinguishable material properties (e.g., due to corrosion) and/or distinguishable mechanical properties. **Figure 3** also schematically illustrates three of the integrated multi-sensor devices 5 of pig 1 moving along the axial direction to acquire various signals, described further hereinbelow, for sensing topological/topographic/geometric features, mechanical properties, and/or material properties at a down pipe sampling rate (schematically indicated by indicia 28) that depends on the acquisition rate and the spatial resolution of the sensors and at a circumferential sampling rate that depends on sensor device (head) density and the number of sensors of a given type per sensor head. While the circumferential distance between heads may be designed to be small or negligible, in alternative embodiments, rather than providing a single circumferential ring 7 of integrated multi-sensor devices 5, two or more circumferential rings may be provided with the sensors from different rings offset in the circumferential direction (i.e., azimuthally) to provide a desired circumferential spatial resolution (e.g., without necessarily requiring a particularly close circumferential packing of the multi-sensor devices in a given ring).

In various embodiments, such features (or properties, or characteristics, or attributes) as determined from one or more of the acquired signals may be represented as absolute quantities or values (e.g., wall thickness in millimeters) and/or as relative values (e.g., change in wall thickness on a point-by-point basis), and may be based on calibration to a known, measured value and/or with respect to a reference value measured using a different sensing modality. Accordingly, in accordance with some embodiments of the present invention, features are identified in a data stream when data from one or more sensors and/or its modes (e.g., for an EMAT sensor) deviate from a determined reference beyond a specified limit and/or minimum tolerance threshold of the sensor technology. As understood by those skilled in the art, Integrity Assessment codes are established in the industry (e.g., API, ASME, DNV, etc.) that all fundamentally require information on the geometry, mechanical material properties and/or stress-strain state, remaining wall thickness, and continuity of material. Accordingly, as will be understood by those skilled in the art, various embodiments of the present invention provide such information, and provide for accurate representations of localized regions of interest of a pipeline for purposes of structural integrity assessment.

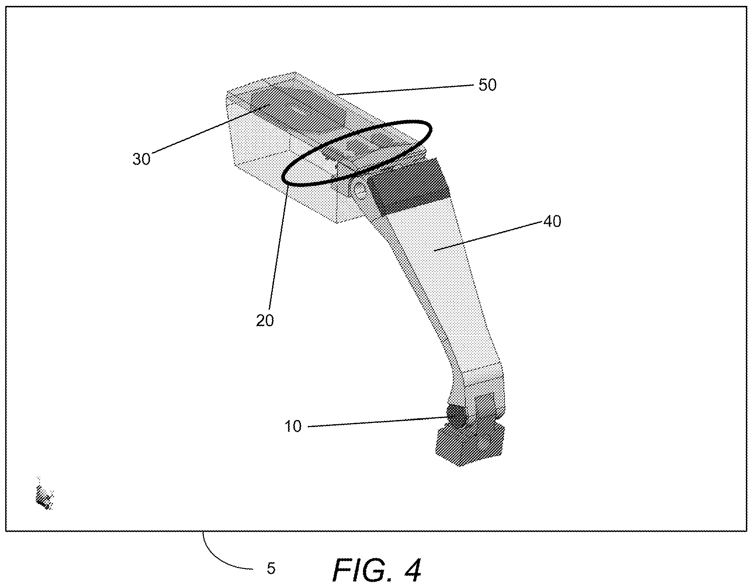

Referring now to **Figure 4**, an integrated multi-sensor device **5** according to some embodiments of the present invention is shown in more detail. As shown, according to such embodiments, integrated multi sensor device 5 comprises at least a caliper transducer **10**, a magnetic-flux-leakage (MFL) transducer **20**, and an eddy current (EC) and Electromagnetic Acoustic Transducer (EMAT) coil **30**. As shown in Figure 4, the coil **30**, and the MFL transducer **20**, are located within a common housing, referred to herein as sensor head **50**, which may be implemented with a lower cover or housing 37 and a wear-resistant, non-conductive (i.e., non-electrically conductive, such as a polymer) cover 33, which may contact the inner wall of the pipe as the pig moves therethrough. Simply by way of example, in some implementations, sensor head 50 may have a transverse dimension of about 1 to 2 centimeters and an axial dimension of about 2.5 to 5.0 centimeters, though its size may vary outside these illustrative dimensions depending on the implementation. The sensor head **50** is attached to a sensor arm **40**, which is attached to the body of the multi-sensor device at a joint which includes a caliper sensor **10**. For clarity, Figure 4 does not explicitly depict other components that, in various embodiments, may be included within head **50**, such as circuitry for driving, as well as for receiving signals from, coil **30** (e.g., transmit/receive circuitry), local memory for storing acquired data, a processor (e.g., microcontroller) operable, for example, in controlling the sensors as well in transferring acquired data from local memory to a storage medium or media (e.g., semiconductor memory) located in instrumentation vehicle **45**.

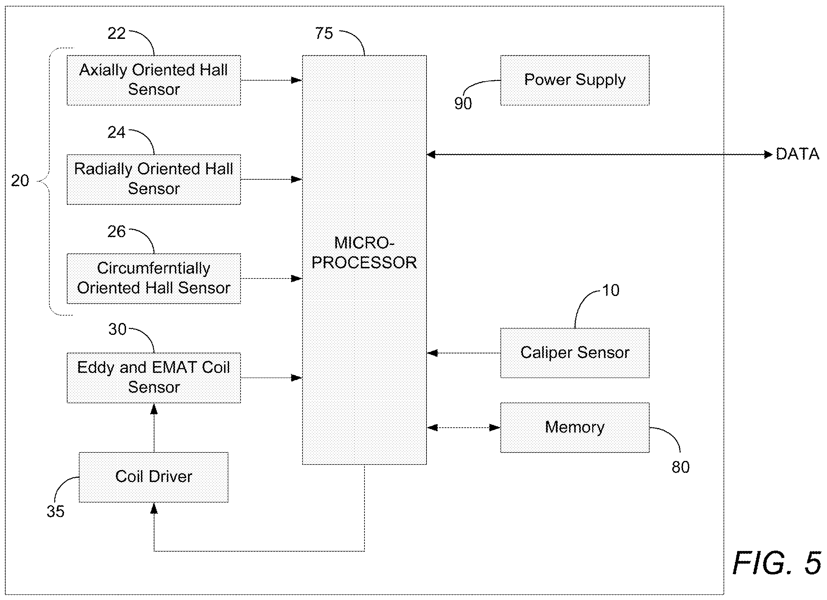

**Figure 5** is an illustrative block diagram of a multi-sensor device **5** in accordance with some embodiments of the present invention, schematically representing that each of the sensors in one multi-sensor device are connected to a microprocessor **75**. More specifically, multi-sensor device **5**, in such an embodiment, includes a microprocessor 75; a caliper sensor **10**; an MFL transducer **20** implemented as at least one (i.e., one or more) axially oriented Hall sensor **22**, at least one radially oriented Hall sensor **24**, and at least one circumferentially oriented Hall sensor **26**; an EC/EMAT coil 30; a coil driver 35; a memory **80** for storing acquired signal data and/or programs executed by microprocessor 75; and a power supply **90** to power the microprocessor **75** and other components that may require power (e.g., memory 80, coil driver, etc.). As understood by those skilled in the art, power may be supplied from a power source in the instrumentation vehicle to power supply **90**, which may be implemented as a power regulator or converter (e.g., a switched mode power supply) to generate and control the power requirements of the various powered components in multi-sensor device 5. Alternatively or additionally, power may be supplied from a power source in the instrumentation directly to the microprocessor and/or other components (e.g., eliminating power supply 90). While memory 80 is depicted as separate from microprocessor 75, memory 80 generally represents any memory located in multi-sensor device 5, such as one or more on-chip (i.e., on-chip with respect to the microprocessor) and/or off-chip memories, which may be implemented as one or more types of memory (e.g., volatile, non-volatile, SRAM, DRAM, FLASH, etc.). Data collected from the sensors as well as programs implemented by the microprocessor may be stored separately or together in one or more of such on-chip and/or off-chip memories.

The microprocessor **75** may be located in any of a variety of locations in the multi-sensor device, such as in the arm or sensor head **50.** After acquiring data (e.g., storing it in memory 80 and/or another local memory), microprocessor 75 may (e.g., periodically or on an as-needed basis) output the collected data to other devices (e.g., memory located in the instrumentation part **45**) for storage and/or further processing. In some embodiments, microprocessor 75 may be operable to pre-process certain acquired data. In some embodiments, the microprocessor in addition to interfacing and collecting data from each of the sensors, also controls the functionality of the coil **30** (e.g., to control excitation of the coil with desired excitation waveforms). According to the some embodiments, microcontroller **75** may be mounted on a circuit board and connected to the single coil and configured to induce a waveform in the coil via a coil driver **35** and thereby create an eddy current and/or acoustic vibration in the pipeline wall adjacent the sensor body. Though not explicitly depicted as such, microprocessor 75 may be coupled to receiver circuitry for receiving signals from the EC/EMAT coil. In some embodiments, such receiver circuitry may be provided together with (e.g., integrated with) transmitter circuitry of the coil driver **35** so that the microprocessor interfaces with the EC/EMAT coil via the coil driver (e.g., transceiver) for both exciting the coil and receiving signals from the coil. In accordance with stored program control, which may be responsive to various user inputs or user set-up, and which may be user alterable, microprocessor may be operable to control via the coil driver **35** when and how the coil is driven to generate electromagnetic radiation for concurrently or separately generating/sensing EC signals and/or one or more EMAT mode signals.

In accordance with some embodiments, a plurality of the multi-sensor devices 5 may share and be connected to one microprocessor, e.g., one or more multi-sensor devices would not house a microprocessor, but would be communicably coupled to a microprocessor housed in another multi-sensor device. Additionally, in some embodiments, a master processor may be located within the pig, such as in the instrumentation part **45**, to provide overall control and management of microprocessors located in the multi-sensor devices 5.

The caliper or deformation sensor **10** measures a rotation about a pivot axis where the sensor arm and head are mounted. Rotational movement about the pivot axis generates a signal in the sensor which then can be interpreted. The caliper sensor **10** may be implemented using any of a variety of transducer types (e.g., optical, electrical, magnetic, electromechanical (such as a rotary variable differential transformer (RVDT), magnetic, etc.) to convert rotational motion into a relative or proportional measurable signal reflecting a change in strain, capacitance, resistance, etc. The known dimensions of the sensor head **50** and arm **40** can be used to determine a deflection distance of the head **50.** When considered in context of a plurality of circumferentially arranged integrated multi-sensor devices around an axis-symmetric tool in a pipe, this allows for measurement of inner diameter of the pipe. Additionally, as will be further understood below, the determined deflection of the head may be used to correct or compensate acquired signals (e.g., their magnitudes) and/or the spatial position associated with the acquired signals. For instance, if the head is angled as it traverses the sloped wall of a depression in the axial direction, then the actual displacement in the axial direction for the sampled signals may not equal the linear displacement determined from, for example, the odometer wheels, but may be corrected for the angle of the sensor head. One or more additional sensors may be provided to determine the head orientation; for example, an additional rotational transducer may be provided to measure the rotation about the pivot that joins the head to the arm.

In accordance with some embodiments of the present invention, Magnetic Flux Leakage (MFL) sensor **20** is implemented as Hall Effect devices configured to detect axial, radial, and azimuthal (circumferential) magnetic field components. The Hall Effect devices comprising MFL sensor 20, which sense variations in the leakage of the magnetic flux coupled into the pipeline wall via magnetizing brushes **15a** and **15b**, are responsive to localized and volumetric changes in material, such corrosion changes, magnetic differences, mechanical differences, and geometry changes. While it is known in the art of intelligent pig in-line inspection tools to measure the magnetic flux leakage associated with defects in pipeline wall, conventional MFL devices are only able to provide limited quantitative interpretations for corrosion or metal loss, and are unable to provide any direct measurement of the amount or extent of loss, as such calculations rely on various assumptions concerning the magnetic materials and wall thickness behavior.

As described above, in accordance with some embodiments of the present invention, coil 30 is implemented as both an Eddy Current (EC) transducer and an EMAT sensor, for both generating and receiving EC and EMAT signals. It will be understood, however, that various alternative embodiments may employ separate coils for EC and EMAT and/or separate coils for transmission and reception for EC and/or EMAT. In some embodiments, coil 30 may be driven with respective signals for inducing an EC signal and an EMAT acoustic signal, and respective corresponding signals may be received by the coil. In some embodiments, a common excitation signal may be used to induce both an eddy current and an EMAT acoustic signal in the pipeline wall. Regardless of whether the coil is driven with separate signals or a common signal for inducing an EC signal and EMAT acoustic signal, each coil drive signal may excite one or more EMAT acoustic signal modes (e.g., depending on the frequency spectrum of the excitation signal, the pipe geometry, the magnetic field strength and orientation, etc.), and the coil may be periodically or intermittently driven with different signals to cause excitation of different EMAT acoustic signal modes (e.g., longitudinal modes, shear horizontal modes), which, for example, may propagate radially (e.g., to measure wall thickness) or circumferentially. Signals received by coil 30 may be filtered according to frequency and/or reception time to extract or distinguish signals corresponding to different EMAT modes and/or to distinguish EC signals from EMAT signals.

In accordance with some embodiments of the present invention, EC measurements are used to determine the "lift-off' (or standoff distance) of the coil from the inner wall as well as to detect near-surface features, e.g., metal loss, material changes, discontinuities, while a first EMAT mode is used to determine wall thickness (e.g., from the round-trip time-of-flight for the EMAT acoustic wave to traverse the pipe wall) and to detect external coating disbondment, and metal loss, and one or more additional EMAT modes (e.g., circumferential mode) is/are used to detect axial discontinuities, external coating disbondment, and metal loss.

Variations in the standoff distance determined from the EC measurement may be due to various causes, such as sensor movement away from the pipeline wall or absence of pipeline material (e.g., due to dents or corrosion). In accordance with some embodiments of the present invention, processing of the acquired EC signal may include comparing the amplitude and phase of the acquired EC signal to one or more known reference signals (e.g., acquired on an essentially identical reference pipeline having known properties), wherein deviation from and/or similarity to one or more known reference signals is indicative of various changes in geometry and/or material properties at or near the surface.

As understood by those skilled in the art, EMAT sensors may be implemented with different configurations of magnets and coils and may be configured differently depending on, for example, whether the transducer will rely primarily on exclusively on the Lorentz effect (e.g., for non-ferromagnetic materials) or magnetostrictive effect for exciting and detecting acoustic vibrations in the pipeline material. For instance, coils may be configured as racetrack, meander, etc., and some EMAT sensors include one or more magnets disposed over the coil to induce a magnetic field in the underlying material (e.g., pipe wall) whereas some EMAT sensors do not include such an overlying magnet, but instead function in conjunction with a magnetic field coupled into the material from a region laterally or axially disposed relative to the EMAT sensor (e.g., an external magnet that induces a magnetic field in the plane of the pipeline wall). Various embodiments of the present invention may use different types of EMAT sensors, either such that a pig employs only one type of EMAT sensor or such that a pig employs two or more different types of EMAT sensors (e.g., a multi-sensor head comprising different types of EMAT sensors; different EMAT sensor types being in separate heads in the same circumferential multi-sensor ring or in different circumferential sensor rings, etc.).

As will be further understood in view of the ensuing description, the EMAT, EC, MFL, and caliper sensors may be operable to acquire signals at the same sampling rate (though different sampling rates are possible), and information from various combinations of the acquired signals may be processed to provide for improved feature detection. For example, the caliper measurement and the EC measurement include complementary information at least insofar as they both provide an indication of the standoff distance of the sensor head. For small standoff distances, both the EC and the caliper measurement may be used to inform the determination of the metal loss (and other volumetric discontinuities) from the MFL measurement. More specifically, both the EC and the caliper measurement may be used to more accurately determine a standoff distance, which in turn is used for point-by-point correction of the acquired MFL signal, allowing for more accurately quantifying and segregating the MFL information to allow for accurate determination of metal loss and other volumetric discontinuities. Also, the caliper measurement further assists in discerning between ID and OD metal losses, which may be inferred from the EC signal and MFL signals (e.g., if the MFL signal increases and the EC signal remains the same, then the volumetric loss may be inferred as being on the outer wall).

For large standoff distances, the EC signal (which decays rapidly with standoff distance) may not be detectable; however, the caliper measurement is still available to provide a standoff distance measurement that is used for the point-by-point correction of the MFL signal, to allow for quantifying and segregating the MFL information even in the absence of an EC signal.

In further embodiments, the independent standoff distance information provided by the caliper measurement may be leveraged for segregating the EC signal's amplitude and phase information, so that the EC signal may be used to further characterize the defects.

In yet further embodiments, EMAT signal generation/acquisition is also employed, and may be by way of the same coil used for EC generation/acquisition or by way of a separate coil/transducer. The EMAT signal is used for providing a measurement of the wall thickness (based on round-trip time-of-flight) to provide an "absolute" reference of wall thickness, while the EC/MFL/caliper information is used to calculate relative wall thickness changes and discern defect location (e.g., inner diameter vs. outer diameter metal loss). In some implementations, the EMAT signal may be sampled at the same rate and location as the EC/MFL signals, and the changes in the EMAT-measured wall thickness can also be compared against the EC/MFL (and caliper) relative wall thickness measurements to provide additional corroboration of the defect detection. In other implementations, the EMAT signal may be sampled at a lower rate than the EC/MFL signal (and even along a different portion of the pipe) to provide a nominal/average wall thickness ("baseline").

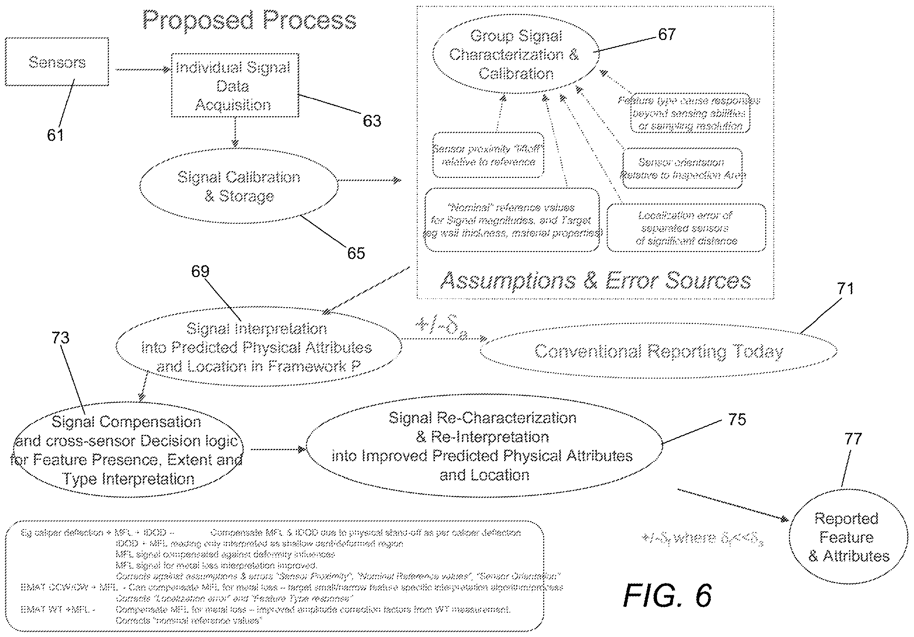

As indicated above, acquisition of the signals from the various sensors provides for many embodiments for processing the acquired signals in various combinations to provide for improved characterization of the pipeline integrity (e.g., discerning features with greater sensitivity, greater accuracy, greater confidence levels, etc.). **Figure 6** is an operational flow diagram illustrating various methods for processing signals acquired from a multi-sensor device, in accordance with some embodiments of the present invention. Signals acquired (step 63) individually from the EC, EMAT, caliper, and MFL sensors 61 at respective desired sampling rates (e.g., at the same sampling rate) are stored (step 65), typically as values reflecting a calibration of the sensor (e.g., the acquired signal may be scaled or normalized according to a calibration factor to provide the stored value).

The stored data for each sensor then undergoes characterization and/or calibration on a group-wise basis (step 67); for example, over one or more subsets of the stored data values, such as the data values corresponding to a plurality of localized regions (e.g., pixels or voxels), which may comprise a region of interest (ROI). Such calibration may include data pre-processing, such as filtering (e.g., spatial filtering over local regions comprising a plurality of data values corresponding to pixels or voxels), converting voltage quantities to material property dimensions or spatial dimensions, and/or assessing whether the data is meaningful. Such processing is subject to various assumptions and error sources, such as sensor proximity "liftoff' relative to a nominal reference standoff distance, variations in the orientation of the sensor relative to the inspection area, various types of features causing responses that are beyond the sensing capabilities and/or sampling resolution, localization error due to sensors separated by significant distance (e.g., relative to the physical feature), and assumed nominal reference values (or ranges of values) for signal magnitudes and the target (i.e., measured structure).

The group-wise calibrated and/or characterized (e.g. preprocessed) data is then analyzed or interpreted to identify or extract a spatial representation of physical attributes characterizing the pipeline structure (step 69) and, in accordance with conventional techniques, such attributes are provided to a user (step 71) according to various representations (e.g., user-selectable graphics/visual representations). Based on, for example, various assumptions and error sources, such as those noted above, each of the determined physical attributes is associated with some range or degree of error, represented in Figure 6 as +/-δₐ.

In accordance with some embodiments of the present invention, the physical attributes identified in step 69 are subject to further analysis (step 73) involving, for example, signal compensation and/or cross-sensor decision logic/algorithms (e.g., based on a point-by-point comparison of signals and/or features/attributes corresponding to two or more sensors). In some embodiments, such analysis may include an iterative cross-synthesis algorithm comprising: (1) defining 1st iteration results from each sensing type and relation to precise positions within pipe elements representation with 1st compensated prediction per anomaly type per sensor type (e.g., 1st sensor standoff estimate from IDOD EC sensor used within 1st stage MFL signal compensations); (2) defining 2^{nd} compensated predictions per sensor type from cross-correlation and synthesis derived from 1st stage pipeline representation (e.g., EMAT M2 (i.e., mode 2, corresponding to a circumferentially propagating mode) may detect a narrow feature (e.g., such as feature 21) which would be correlated to MFL data at that position; and/or caliper data predicted deformation and inner wall radial position may be used to compensate MFL and/or EMAT predictions as to wall thickness (or vice versa; i.e., cross-correlation). Areas with atypical MFL signal activity after other sources removed (based on compensation) can be targeted for material property interpretation); and (3) repeating step (2) until a consistent result is obtained (e.g., convergence within a prescribed tolerance). Resolution size of elements (Δr, ΔQ, Δz) may be selected as finer than any given sensor resolution output for purposes of enabling adjustments and interpolation of sensing type resolutions within cross-synthesis.

It is noted that in accordance with various embodiments of the present invention, the sensor assembly position at each sampling point is estimated (e.g., based on the caliper data and odometer data) as well, and used for determining the spatial locations of the acquired samples as well as for compensating or correcting (e.g., scaling) signals that are dependent on the orientation of the sensor relative to the pipe wall. Additionally, as a rigid structure, the transducers within the assembly have physical separation distances that are fixed and known and are also accounted for in determining sample locations for the different sensors and thus in cross-correlating data from different sensors.

Based on the further analysis performed in step 73, the resulting data is analyzed or interpreted to identify or extract a spatial representation of physical attributes characterizing the pipeline structure (step 75) and such attributes are provided to a user (step 77) according to various representations (e.g., user-selectable graphics/visual representations). Based on the further analysis performed in step 73, the range or degree of error, +/-δ_{f}, associated with each of the determined physical attributes in step 75 is less than the range or degree of error, +/-δₐ, associated with the physical attribute as determined in step 69.

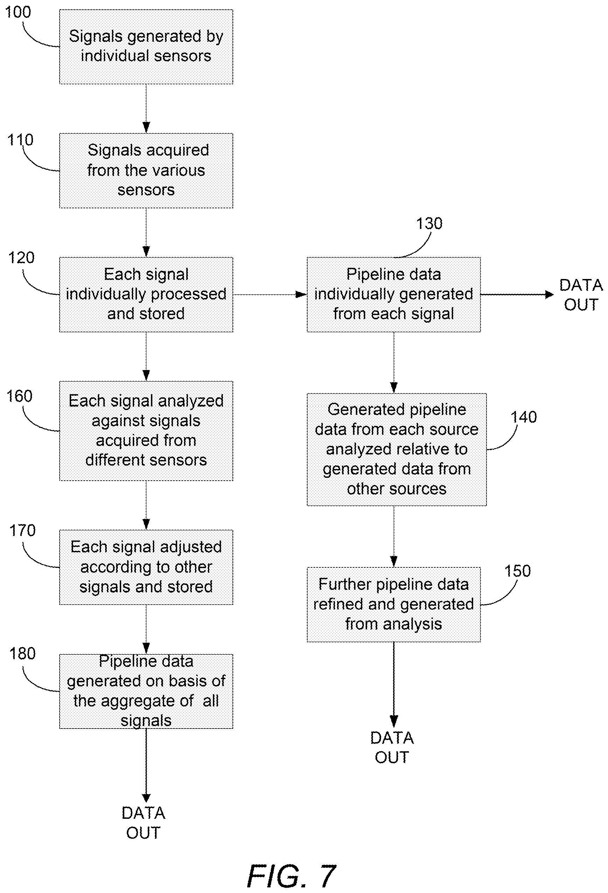

**Figure 7** depicts another method for acquiring and processing signals from a multi-sensor device, such as the hereinabove described illustrative multi-sensor devices, in accordance with some embodiments of the present invention. In step **100**, each of the sensors independently generates a signal. In step **110**, each of the signals is acquired, such as by means of microprocessor 75. It is noted that various embodiments may employ different combinations of sensors. For instance, depending on the particular embodiment, the multi-sensor device **5** may not necessarily contain each of the MFL, the EC, the EMAT, and caliper sensor devices. Furthermore, in other alternative embodiments, while the multi-sensor device may include each of such sensors, the data collection device or microprocessor **75** may be purposely designed or programmed to not excite, not acquire, or otherwise ignore signals from one or more of the particular sensors, as least for particular acquisition sequences. This feature may be controlled by the manufacturer so that there are different levels of service. Accordingly, a customer may only need, request, or pay for a device that acquires and/or processes information from only a subset of the sensors of a multi-sensor device **5.**

After the signals from each sensor in the multi-sensor device are collected, the acquired signals may be individually processed (optionally) and stored, step **120.** For example, in some embodiments, microprocessor 75 and/or a processor in instrumentation vehicle **45** may be operable in performing error correction or compensation or other appropriate processing (e.g., based on normalization, or calibration, etc.); alternatively, or additionally, such processing may be performed by off-line processing.

Depending on the signals acquired, the individual signals from the respective sensors (i.e., caliper, MFL, EC, EMAT) may be directly analyzed to provide information relating to the physical characteristics of the pipe (step **130**). Such analysis may typically be performed in an off-line manner, after transferring the data stored in the pig to one or more other processing devices that are able to interpret or convert the stored signal data into information representing features characterizing the pipe. Furthermore, pipeline feature information generated from each of individual sources may be further analyzed with respect to pipeline feature information extracted from one or more other sensors (step **140**) to provide for correction, improved confidence, improved discrimination of different features, etc. For instance, such analysis may comprise various algorithms (e.g., such as iterative algorithms to provide convergence or 1^{st} order, 2^{nd} order, etc. corrections to a prescribed tolerance), including e.g., mathematical operations, such as correlation and the like to further generate, corroborate, and titrate pipeline feature information, step **150**.

Alternatively or additionally, the stored signal data for each sensor (i.e., the data stored in step 120) may be evaluated and analyzed with respect to the stored signal data for one or more other sensors, step **160**. For instance the acquired MFL signal and the acquired caliper signal may be evaluated against each other, e.g., on a point-by-point basis, according to various algorithms to provide for adjusting, correcting, calibrating, and/or refining, etc., one or more of the signals, step **170**. Then, such adjusted, corrected, calibrated, refined, etc. signals may be processed to output pipeline feature data that characterizes the pipeline integrity, step **180**. For example, pipeline information may be generated as a result of a calculation involving more than one such signals, for example a correlation-based calculation and/or may be generated from individual signals.

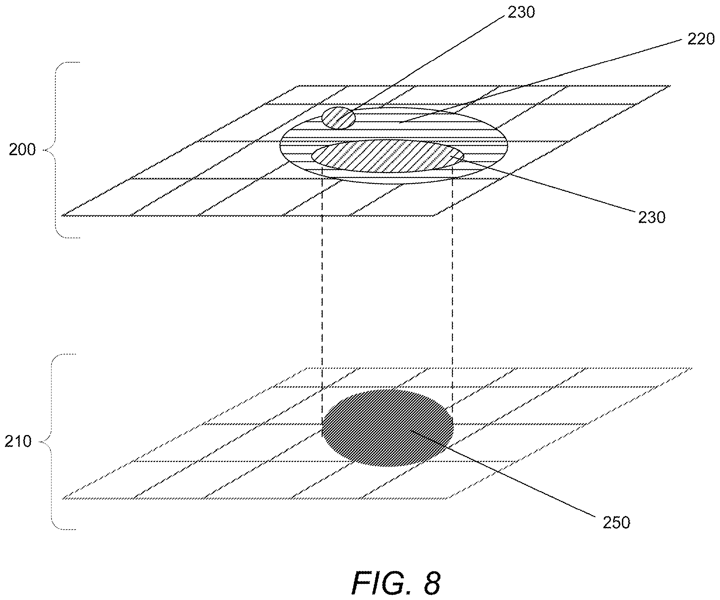

For illustration purposes, **Figure 8** shows a representation of MFL and caliper sensor signals juxtaposed after each acquired sensor signal has been mapped onto a three-dimensional grid representative of the inner pipeline wall. The MFL Grid **200** shows a graphical representation of areas of metal loss, metal change, or corrosion. The MFL data may not precisely distinguish between dents, corrosion, metal loss, but the area **220** represents mild to moderate metal loss or change. The **230** areas represent heavy metal loss or change. In order to get a more accurate picture of the pipeline wall, the caliper data is used as represented in the **210** grid. The caliper data as presented in the **210** grid show areas **250** which contain a metal dent or deformation. As can be seen from **Figure 8**, the caliper signal data can then used to improve the MFL data and distinguish between MFL data due to corrosion or metal changes, and MFL data generated due to a pipeline deformation. Accordingly, by using the caliper information to better assess the MFL signal changes attributable to geometry/topography variations, the MFL data can be corrected and re-analyzed to better measure and quantify material property characteristics.

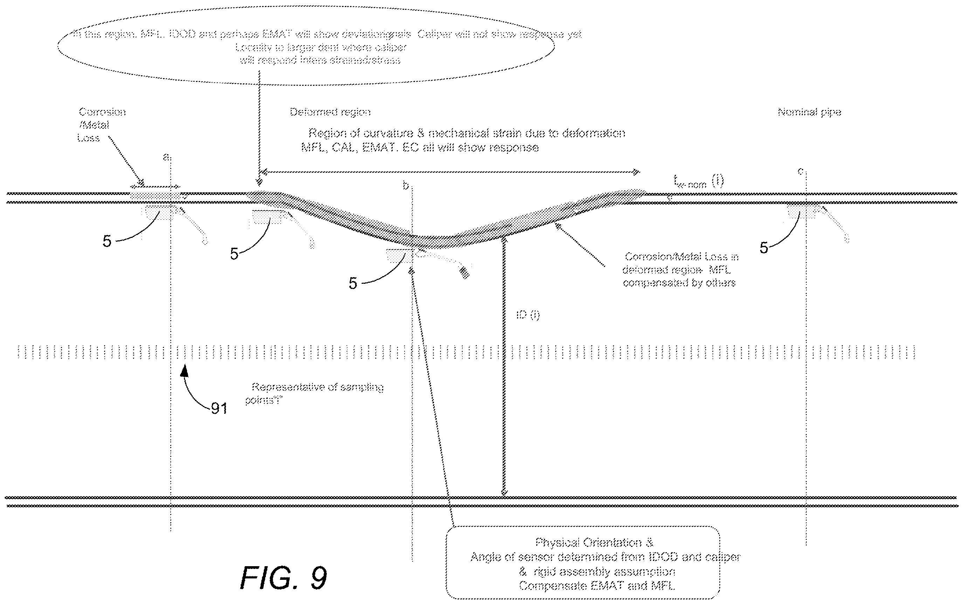

**Figure 9** schematically depicts an illustrative pipeline cross-section in the region of a dent, with one of the multi-sensor devices 5 shown at each of four locations as it traverses the pipe and acquires samples at the illustrated representative sampling rate. Indicia **91** schematically represent sampling points, which may be numerically indexed by integer **i**, and **t_{w-nom}(i)** represents a nominal wall thickness at a sample position **i.** It is noted that **Figure 9** is not necessarily to scale and is set forth primarily for purposes of clarity of exposition to describe some examples of using a multi-sensor device in accordance with some embodiments of the present invention.

As shown, region **a** includes metal loss due to corrosion on the outer surface of the pipe. In this region, while the MFL signal may vary due to a change in the permeability/reluctance, the EMAT signal and IDOD signal may show an insubstantial change Accordingly, cross-synthesis analysis would prevent the MFL data from being misinterpreted as a wall thickness change, but further would provide for identifying this as a region of material property change (e.g., corrosion) and, further, because the variation in the MFL signal may be, at least in part, attributed to a change in the bulk material property, the MFL data may be further processed to assess (e.g., quantify) the material property change.

In region **b**, the physical orientation (including the head angle) of the sensors may be determined from the caliper sensor signal and from the IDOD EC signal, and the EMAT and MFL signals may be compensated/corrected based on the determined EMAT and MFL sensor orientation. Additionally, corrosion/metal loss in this deformed region may be evaluated based on using one or more of the IDOD EC, EMAT, and caliper signals to compensate MFL detection.

In the region between regions **a** and **b**, the relative changes in MFL, EC, and possibly EMAT signals while the caliper signal does not change (e.g., insubstantial change), implies or may be inferred as meaning that the region is at a transition to a deformed region and is associated with stress/strain, which may be estimated based on the local changes in geometry/curvature.

Region c corresponds to a region of nominal pipe characteristics, which may be used to provide relative reference values (e.g., this region may be considered "nominal" or unaltered from expected, and thus the signals or information acquired in this region may be used as a reference for comparison to nearby measured pipe environments). Additionally or alternatively, references can be based on a reference pipe of known characteristics/design (e.g., an absolute reference).

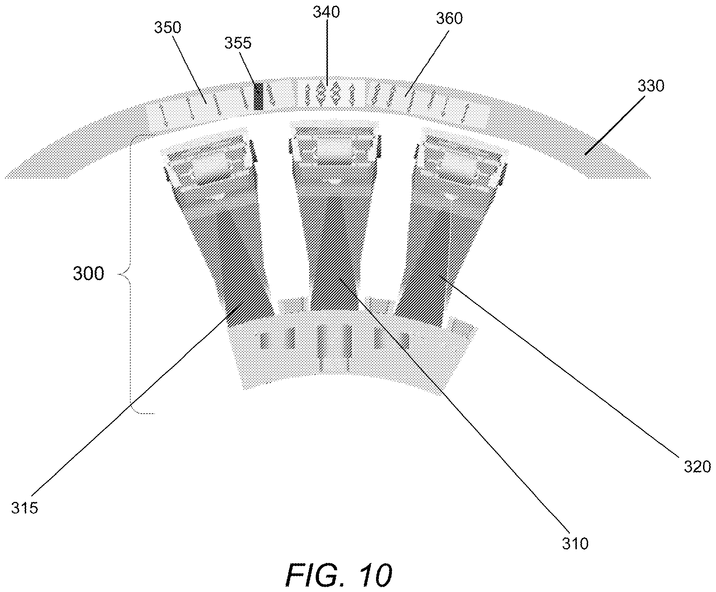

Some embodiments of the present invention relates to using an array of EMAT sensors to acquire pipeline information. **Figure 10** illustrates, in accordance with some embodiments, a pipeline sensor device **300** comprising three EMAT sensors, **310**, **315**, and **320**, which may be implemented as multi-sensor devices 5 as described hereinabove, although sensors other than EMAT sensors are not required. According to the embodiment shown, the EMAT sensors are controlled such that sensor device **310** generates an electromagnetic signal that gives rise to an acoustic (e.g., ultrasonic) vibration that propagates in a generally radial direction across the pipeline wall **330.** A reflected acoustic signal from the outer wall induces an electromagnetic signal that may be received by the same sensor device **310** and used to calculate the thickness of the pipeline wall, as previously explained. In addition, however, the acoustic vibrations excited by sensor device 310 are not merely confined to the area **340**, which directly underlies sensor device **310**, but also travel across peripheral areas **350** and **360**. Thus, in accordance with some embodiments of the present invention, the acoustic signals that traverse areas or zones **350** and **360** (and reflect from the outer wall of the pipe) may be detected by adjacent sensor devices **315** and **320**, respectively, providing for characterization of areas or zones 350 and 360, which do not underlie an EMAT sensor. In accordance with some embodiments, such signals received by adjacent sensor devices **315** and **320** may be compared to the signal received by sensor 310, to each other, and/or to a reference or nominal signal, etc., to identify features (e.g., defects) in the pipeline wall in regions 350 and 360. For example, a defect **355** in pipeline wall **330** in Figure 10 would affect the acoustic dispersion in the **350** zone. Thus, analysis of the signal acquired by adjacent sensor **315** based on an excitation signal generated by sensor 310 would indicate a defect, for example, a crack in the pipe. As will be understood by those skilled in the art, the EMAT sensor array **300** may be implemented according to various one dimensional and two dimensional EMAT sensor configurations and inter-EMAT sensor spacing, and timing control among elements of the array may be provided by one or more processors (e.g., microprocessors in each sensor communicably coupled to each other and/or to a common (e.g., master) processor; a microprocessor that controls a plurality of EMAT sensors, etc.).

The present invention has been illustrated and described with respect to specific embodiments thereof, which embodiments are merely illustrative of the principles of the invention and are not intended to be exclusive or otherwise limiting embodiments. Accordingly, although the above description of illustrative embodiments of the present invention, as well as various illustrative modifications and features thereof, provides many specificities, these enabling details should not be construed as limiting the scope of the invention, and it will be readily understood by those persons skilled in the art that the present invention is susceptible to many modifications, adaptations, variations, omissions, additions, and equivalent implementations without departing from this scope and without diminishing its attendant advantages. For instance, except to the extent necessary or inherent in the processes themselves, no particular order to steps or stages of methods or processes described in this disclosure, including the figures, is implied. In many cases the order of process steps may be varied, and various illustrative steps may be combined, altered, or omitted, without changing the purpose, effect or import of the methods described. It is further noted that the terms and expressions have been used as terms of description and not terms of limitation. There is no intention to use the terms or expressions to exclude any equivalents of features shown and described or portions thereof. Additionally, the present invention may be practiced without necessarily providing one or more of the advantages described herein or otherwise understood in view of the disclosure and/or that may be realized in some embodiments thereof. It is therefore intended that the present invention is not limited to the disclosed embodiments but should be defined in accordance with the claims that follow.

## Claims

1. A multi-sensor assembly operable in characterizing a metallic structure, the multi-sensor assembly comprising:
a housing (50) comprising (i) at least one electrically conductive coil (30) configured for operation as at least one electromagnetic acoustic transducer (EMAT) sensor and at least one eddy current (EC) sensor and (ii) at least one magnetic flux leakage (MFL) sensor (20), wherein the at least one electrically conductive coil (30) and the at least one MFL sensor (20) are configured in the housing (50) such that when the housing (50) is disposed adjacent to or in contact with the metallic structure, the at least one coil (30) and the MFL sensor (20) are operable to acquire EMAT, EC, and MFL signals from a localized region of the metallic structure corresponding to the portion of the housing (50) disposed adjacent to or in contact with the metallic structure; and
at least one deflection sensor (40) configured to generate a signal representative of the spatial position of the housing (50) in response to the topography of the metallic structure;
wherein said signal representative of the spatial position of the housing (50) is capable of being used to correct or compensate at least one of (i) at least one of the acquired EMAT, EC, and MFL signals, and (ii) at least one spatial position associated with at least one of the acquired EMAT, EC, and MFL signals.

2. The multi-sensor assembly according to claim 1, wherein the at least one electrically conductive coil (30) comprises a common coil that is operable as both at least one EMAT sensor and at least one EC sensor.

3. The multi-sensor assembly according to claim 2, wherein the at least one electrically conductive coil (30) comprises a total of one coil.

4. The multi-sensor assembly according to claim 1, wherein the at least one electrically conductive coil (30) comprises separate coils for implementing at least one EMAT sensor and at least one EC sensor.

5. The multi-sensor assembly according to claim 1, further comprising an armature (14) rotatably attached to said housing (50) and coupled to at least one of said at least one deflection sensor.

6. The multi-sensor assembly according to claim 5, wherein said armature (14) is rotatably attached to said housing (50) at a distal end of the armature (14) and is coupled to said at least one deflection sensor (40) such that the at least one deflection sensor generates said signal representative of the spatial position of the housing (50) based on detecting at least one of (i) the position, or change in position, of the armature (14), and (ii) the rotational position, or change in rotational position, of the housing (50) relative to the armature (14).

7. The multi-sensor assembly according to claim 6, wherein said at least one deflection sensor (40) comprises a first deflection sensor that detects the position, or change in position, of the armature, and a second deflection sensor that detects the rotational position, or change in rotational position, of the housing relative to the armature.

8. An in-line inspection instrument (1) for insertion into a pipeline, said in-line inspection instrument comprising a plurality of multi-sensor assemblies according to any preceding claim, arranged in a circumferentially spaced configuration and oriented such that each multi-sensor assembly is operable to acquire signals from a respective circumferential portion of the wall of a pipeline into which the pig is inserted.

9. The in-line inspection instrument according to claim 8, wherein respective signals representative of the spatial position of the housings (50) of different ones of the multi-sensor assemblies are capable of being processed to provide a measurement of the inner diameter of said pipeline.

10. A method for characterizing a metallic structure, the method comprising:
acquiring, for each of a plurality of localized regions of the metallic structure, an electromagnetic acoustic transducer (EMAT) signal, an eddy current (EC) signal, a magnetic flux leakage (MFL) signal, and a deflection signal representing the spatial position of a sensor in response to the topography of a surface of the metallic structure as the sensor moves in a direction parallel the surface, wherein the EMAT, EC and MFL signals are acquired using transducers located within a common housing; and
processing the acquired signals to characterize each of one or more features of the metallic structure based on at least two of the EMAT, EC, MFL, and deflection signals acquired from a common localized region in which at least a portion of the feature is located,
wherein said deflection signal representing the spatial position of the sensor is capable of being used to correct or compensate at least one of (i) at least one of the acquired EMAT, EC, and MFL signals, and (ii) at least one spatial position associated with at least one of the acquired EMAT, EC, and MFL signals.

11. The method according to claim 10, wherein said processing comprises a point-by-point comparison of at least one of (i) at least two different types of the acquired signals, and (ii) characteristics determined from at least two different types of the acquired signals.

12. The method according to claim 10, wherein said processing comprises characterizing the surface topography of the metallic structure based on both the acquired MFL and deflection signals.

13. The method according to claim 10, wherein the EMAT, EC, MFL, and deflection signals are acquired from each of the localized regions using a multi-sensor assembly that comprises sensors configured such that (i) when at least a portion of the multi-sensor assembly is disposed adjacent to or in contact with a given localized region of the metallic structure, the multi-sensor assembly is operable to acquire EMAT, EC, and MFL signals from the given localized region of the metallic structure corresponding to the portion of the multi-sensor assembly disposed adjacent to or in contact with the metallic structure, and (ii) the deflection signal represents the spatial movement of the portion of the multi-sensor assembly disposed adjacent to or in contact with the metallic structure in response to the topography of a surface of the metallic structure as the portion of the multi-sensor assembly moves in a direction parallel to the surface.

## Patentansprüche

1. Multisensorbaugruppe, die zum Charakterisieren einer Metallstruktur betreibbar ist, wobei die Multisensorbaugruppe Folgendes umfasst:
ein Gehäuse (50), umfassend (i) mindestens eine elektrisch leitfähige Spule (30), die zum Betrieb als mindestens ein elektromagnetischer akustischer Wandler(EMAT)-Sensor und mindestens ein Wirbelstrom(EC)-Sensor konfiguriert ist, und (ii) mindestens einen magnetischen Streufluss(MFL)-Sensor (20), wobei die mindestens eine elektrisch leitfähige Spule (30) und der mindestens eine MFL-Sensor (20) im Gehäuse (50) so konfiguriert sind, dass, wenn das Gehäuse (50) angrenzend an oder in Kontakt mit der Metallstruktur angeordnet ist, die mindestens eine Spule (30) und der MFL-Sensor (20) betreibbar sind, um EMAT-, EC- und MFL-Signale von einem lokalisierten Bereich der Metallstruktur zu erfassen, der dem Abschnitt des Gehäuses (50) entspricht, der angrenzend an oder in Kontakt mit der Metallstruktur angeordnet ist; und
mindestens einen Ablenkungssensor (40), der konfiguriert ist, um ein Signal zu erzeugen, das die räumliche Position des Gehäuses (50) als Reaktion auf die Topographie der Metallstruktur darstellt;
wobei das Signal, das die räumliche Position des Gehäuses (50) darstellt, verwendet werden kann, um mindestens eines von (i) mindestens einem der erfassten EMAT-, EC- und MFL-Signale und (ii) mindestens einer räumlichen Position, die mindestens einem der erfassten EMAT-, EC- und MFL-Signale zugeordnet ist, zu korrigieren oder zu kompensieren.

2. Multisensorbaugruppe nach Anspruch 1, wobei die mindestens eine elektrisch leitfähige Spule (30) eine gemeinsame Spule umfasst, die sowohl als mindestens ein EMAT-Sensor als auch als mindestens ein EC-Sensor betreibbar ist.

3. Multisensorbaugruppe nach Anspruch 2, wobei die mindestens eine elektrisch leitfähige Spule (30) insgesamt eine Spule umfasst.

4. Multisensorbaugruppe nach Anspruch 1, wobei die mindestens eine elektrisch leitfähige Spule (30) getrennte Spulen zum Implementieren mindestens eines EMAT-Sensors und mindestens eines EC-Sensors umfasst.

5. Multisensorbaugruppe nach Anspruch 1, ferner umfassend einen Anker (14), der drehbar am Gehäuse (50) befestigt und mit mindestens einem des mindestens einen Ablenkungssensors gekoppelt ist.

6. Multisensorbaugruppe nach Anspruch 5, wobei der Anker (14) an einem distalen Ende des Ankers (14) drehbar am Gehäuse (50) befestigt und mit dem mindestens einen Ablenkungssensor (40) derart gekoppelt ist, dass der mindestens eine Ablenkungssensor das für die räumliche Position des Gehäuses (50) repräsentative Signal erzeugt, basierend auf dem Erfassen mindestens eines von (i) der Position oder Positionsänderung des Ankers (14) und (ii) der Drehposition oder der Änderung der Drehposition des Gehäuses (50) in Bezug auf den Anker (14).

7. Multisensorbaugruppe nach Anspruch 6, wobei der mindestens eine Ablenkungssensor (40) einen ersten Ablenkungssensor, der die Position oder Positionsänderung des Ankers erfasst, und einen zweiten Ablenkungssensor umfasst, der die Drehposition oder die Änderung der Drehposition des Gehäuses in Bezug auf den Anker erfasst.

8. Inline-Prüfgerät (1) zum Einsetzen in eine Rohrleitung, wobei das Inline-Prüfgerät eine Vielzahl von Multisensorbaugruppen nach einem der vorstehenden Ansprüche umfasst, die in einer in Umfangsrichtung beabstandeten Konfiguration angeordnet und so ausgerichtet sind, dass jede Multisensorbaugruppe betreibbar ist, um Signale von einem jeweiligen Umfangsabschnitt der Wand einer Rohrleitung zu erfassen, in die der Molch eingesetzt wird.

9. Inline-Prüfgerät nach Anspruch 8, wobei entsprechende Signale, die für die räumliche Position der Gehäuse (50) verschiedener der Multisensorgruppen repräsentativ sind, verarbeitet werden können, um eine Messung des Innendurchmessers der Rohrleitung zu bereitzustellen.

10. Verfahren zum Charakterisieren einer Metallstruktur, wobei das Verfahren Folgendes umfasst:
Erfassen eines elektromagnetischen akustischen Wandler(EMAT)-Signals, eines Wirbelstrom(EC)-Signals, eines magnetischen Streufluss(MFL)-Signals und eines Ablenksignals, das die räumliche Position eines Sensors als Reaktion auf die Topographie einer Oberfläche der Metallstruktur darstellt, wenn sich der Sensor in einer Richtung parallel zur Oberfläche bewegt, für jeden aus einer Vielzahl von lokalisierten Bereichen der Metallstruktur, wobei die EMAT-, EC- und MFL-Signale unter Verwendung von Wandlern erfasst werden, die sich in einem gemeinsamen Gehäuse befinden; und
Verarbeiten der erfassten Signale, um jedes von einem oder mehreren Merkmalen der Metallstruktur zu charakterisieren, basierend auf mindestens zwei der EMAT-, EC-, MFL- und Ablenksignale, die von einem gemeinsamen lokalisierten Bereich erfasst wurden, in dem sich mindestens ein Teil des Merkmals befindet, wobei das Ablenksignal, das die räumliche Position des Sensors darstellt, dazu verwendet werden kann, mindestens eines von (i) mindestens einem der erfassten EMAT-, EC- und MFL-Signale und (ii) mindestens einer räumlichen Position, die mindestens einem der erfassten EMAT-, EC- und MFL-Signale zugeordnet ist, zu korrigieren oder zu kompensieren.

11. Verfahren nach Anspruch 10, wobei das Verarbeiten einen Punkt-zu-Punkt-Vergleich von mindestens einem von (i) mindestens zwei verschiedenen Arten der erfassten Signale und (ii) aus mindestens zwei verschiedenen Arten der erfassten Signale bestimmten Charakteristiken umfasst.

12. Verfahren nach Anspruch 10, wobei das Verarbeiten das Charakterisieren der Oberflächentopographie der Metallstruktur basierend sowohl auf dem erfassten MFL- als auch auf dem Ablenksignal umfasst.

13. Verfahren nach Anspruch 10, wobei die EMAT-, EC-, MFL- und Ablenksignale von jedem der lokalisierten Bereiche unter Verwendung einer Multisensorbaugruppe erfasst werden, die Sensoren umfasst, die so konfiguriert sind, dass, (i) wenn mindestens ein Teil der Multisensorbaugruppe angrenzend an oder in Kontakt mit einem bestimmten lokalisierten Bereich der Metallstruktur angeordnet ist, die Multisensorbaugruppe betreibbar ist, um EMAT-, EC- und MFL-Signale von dem gegebenen lokalisierten Bereich der Metallstruktur zu erfassen, der dem Abschnitt der Multisensorbaugruppe entspricht, der angrenzend an oder in Kontakt mit der Metallstruktur angeordnet ist, und (ii) das Ablenksignal die räumliche Bewegung des Abschnitts der Multisensorbaugruppe darstellt, der angrenzend an oder in Kontakt mit der Metallstruktur als Reaktion auf die Topographie einer Oberfläche der Metallstruktur angeordnet ist, wenn sich der Abschnitt der Multisensorbaugruppe in einer Richtung parallel zur Oberfläche bewegt.

## Revendications

1. Ensemble à capteurs multiples opérationnel pour caractériser une structure métallique, l'ensemble à capteurs multiples comprenant :
un logement (50) comprenant (i) au moins une bobine électriquement conductrice (30) configurée pour un fonctionnement en tant qu'au moins un capteur à transducteur acoustique électromagnétique (EMAT) et au moins un capteur de courant de Foucault (EC) et (ii) au moins un capteur de fuite de flux magnétique (MFL) (20), dans lequel l'au moins une bobine électriquement conductrice (30) et l'au moins un capteur MFL (20) sont configurés dans le logement (50) de telle sorte que lorsque le logement (50) est disposé adjacent à ou en contact avec la structure métallique, l'au moins une bobine (30) et le capteur MFL (20) sont opérationnels pour acquérir des signaux EMAT, EC et MFL à partir d'une région localisée de la structure métallique correspondant à la partie du logement (50) disposée adjacente à ou en contact avec la structure métallique ; et
au moins un capteur de déflexion (40) configuré pour générer un signal représentatif de la position spatiale du logement (50) en réponse à la topographie de la structure métallique ;
dans lequel ledit signal représentatif de la position spatiale du logement (50) est susceptible d'être utilisé pour corriger ou compenser au moins l'un parmi (i) au moins l'un des signaux EMAT, EC et MFL acquis, et (ii) au moins une position spatiale associée à au moins l'un des signaux EMAT, EC et MFL acquis.

2. Ensemble à capteurs multiples selon la revendication 1, dans lequel l'au moins une bobine électriquement conductrice (30) comprend une bobine commune qui est opérationnelle à la fois en tant qu'au moins un capteur EMAT et au moins un capteur EC.

3. Ensemble à capteurs multiples selon la revendication 2, dans lequel l'au moins une bobine électriquement conductrice (30) comprend un total d'une bobine.

4. Ensemble à capteurs multiples selon la revendication 1, dans lequel l'au moins une bobine électriquement conductrice (30) comprend des bobines indépendantes pour mettre en oeuvre au moins un capteur EMAT et au moins un capteur EC.

5. Ensemble à capteurs multiples selon la revendication 1, comprenant en outre un induit (14) fixé de manière rotative audit logement (50) et couplé à au moins l'un parmi ledit au moins un capteur de déflexion.

6. Ensemble à capteurs multiples selon la revendication 5, dans lequel ledit induit (14) est fixé de manière rotative audit logement (50) au niveau d'une extrémité distale de l'induit (14) et est couplé audit au moins un capteur de déflexion (40) de telle sorte que l'au moins un capteur de déflexion génère ledit signal représentatif de la position spatiale du logement (50) sur la base de la détection d'au moins l'un parmi (i) la position, ou un changement de position, de l'induit (14), et (ii) la position de rotation, ou un changement de position de rotation, du logement (50) par rapport à l'induit (14).

7. Ensemble à capteurs multiples selon la revendication 6, dans lequel ledit au moins un capteur de déflexion (40) comprend un premier capteur de déflexion qui détecte la position, ou un changement de position, de l'induit, et un deuxième capteur de déflexion qui détecte la position de rotation, ou un changement de position de rotation, du logement par rapport à l'induit.

8. Instrument d'inspection en ligne (1) pour insertion dans une conduite, ledit instrument d'inspection en ligne comprenant une pluralité d'ensembles à capteurs multiples selon une quelconque revendication précédente, agencés dans une configuration espacée sur la circonférence et orientés de telle sorte que chaque ensemble à capteurs multiples est opérationnel pour acquérir des signaux à partir d'une partie circonférentielle respective de la paroi d'une conduite vers l'intérieur de laquelle le racleur est inséré.

9. Instrument d'inspection en ligne selon la revendication 8, dans lequel des signaux respectifs représentatifs de la position spatiale des logements (50) de différents parmi les ensembles à capteurs multiples sont susceptibles d'être traités pour fournir une mesure du diamètre interne de ladite conduite.

10. Procédé pour caractériser une structure métallique, le procédé comprenant :
l'acquisition, pour chacune d'une pluralité de régions localisées de la structure métallique, d'un signal de transducteur acoustique électromagnétique (EMAT), d'un signal de courant de Foucault (EC), d'un signal de fuite de flux magnétique (MFL) et d'un signal de déflexion représentant la position spatiale d'un capteur en réponse à la topographie d'une surface de la structure métallique à mesure que le capteur se déplace dans une direction parallèle à la surface, dans lequel les signaux EMAT, EC et MFL sont acquis en utilisant des transducteurs situés au sein d'un logement commun ; et
le traitement des signaux acquis pour caractériser chacune parmi la ou les caractéristiques de la structure métallique sur la base d'au moins deux des signaux EMAT, EC, MFL et de déflexion acquis à partir d'une région localisée commune dans laquelle au moins une partie de la caractéristique se situe, dans lequel ledit signal de déflexion représentant la position spatiale du capteur est susceptible d'être utilisé pour corriger ou compenser au moins l'un parmi (i) au moins l'un des signaux EMAT, EC et MFL acquis, et (ii) au moins une position spatiale associée à au moins l'un des signaux EMAT, EC et MFL acquis.

11. Procédé selon la revendication 10, dans lequel ledit traitement comprend une comparaison point par point d'au moins l'un parmi (i) au moins deux types différents des signaux acquis, et (ii) des caractéristiques déterminées à partir d'au moins deux types différents des signaux acquis.

12. Procédé selon la revendication 10, dans lequel ledit traitement comprend la caractérisation de la topographie de surface de la structure métallique sur la base à la fois des signaux MFL et de déflexion acquis.

13. Procédé selon la revendication 10, dans laquelle les signaux EMAT, EC, MFL et de déflexion sont acquis à partir de chacune des régions localisées en utilisant un ensemble à capteurs multiples qui comprend des capteurs configurés de telle sorte que (i) lorsqu'au moins une partie de l'ensemble à capteurs multiples est disposée adjacente à ou en contact avec une région localisée donnée de la structure métallique, l'ensemble à capteurs multiples est opérationnel pour acquérir des signaux EMAT, EC et MFL à partir de la région localisée donnée de la structure métallique correspondant à la partie de l'ensemble à capteurs multiples disposée adjacente à ou en contact avec la structure métallique, et (ii) le signal de déflexion représente le mouvement spatial de la partie de l'ensemble à capteurs multiples disposée adjacente à ou en contact avec la structure métallique en réponse à la topographie d'une surface de la structure métallique à mesure que la partie de l'ensemble à capteurs multiples se déplace dans une direction parallèle à la surface.
